# EUROPÄISCHE PATENTSCHRIFT

(11) **EP 4 243 652 B1**
(45) Veröffentlichungstag und Bekanntmachung des Hinweises auf die Patenterteilung: **25.06.2025**
(21) Anmeldenummer: 21778472.7
(22) Anmeldetag: 20.09.2021
(51) Int. Cl.: A47B 88/447, A47B 88/493, A47B 88/57

(54) **AUSZIEHFÜHRUNG**
PULL-OUT GUIDE
GUIDE D'EXTRACTION

(30) Priorität: 16.11.2020 AT 2522020
(43) Veröffentlichungstag der Anmeldung: 20.09.2023
(73) Patentinhaber: Fulterer AG & Co KG, 6890 Lustenau (AT)
(72) Erfinder: ILL, Bernhard, 6914 Hohenweiler (AT)
(74) Vertreter: VKK Patentanwälte PartG mbB
(86) Internationale Anmeldenummer: PCT/EP2021/075828
(87) Internationale Veröffentlichungsnummer: WO 2022/100911

(56) Entgegenhaltungen:
- EP-A1- 1 795 088
- US-A- 4 765 699

## Beschreibung

Die Erfindung bezieht sich auf eine Ausziehführung zum Ausziehen eines ausziehbaren Möbelteils aus einem Möbelkorpus, mit einer ersten Schiene und einer zweiten Schiene, wobei die erste Schiene aus der zweiten Schiene in eine Ausziehrichtung ausgehend von einer eingeschobenen Stellung in eine ausgezogene Stellung ausziehbar ist, in welcher ein weiteres Ausziehen der ersten Schiene aus der zweiten Schiene durch Anschlagen eines Anschlagelements der ersten Schiene an einem Auszieh-Anschlag der zweiten Schiene begrenzt ist, und wobei an der zweiten Schiene ein Sicherungsteil beweglich gelagert ist, welches zwischen einer Freigabestellung, in welcher zum vollständigen Herausnehmen der ersten Schiene aus der zweiten Schiene ausgehend von der ausgezogenen Stellung der ersten Schiene die erste Schiene unter Anhebung des vorderen Endes der ersten Schiene gegenüber der zweiten Schiene (2) so weit verschwenkbar ist, dass das Anschlagelement der ersten Schiene außer Eingriff mit dem Auszieh-Anschlag der zweiten Schiene bringbar ist und über den Auszieh-Anschlag der zweiten Schiene hinweg bewegbar ist, und einer Sperrstellung verstellbar ist, in welcher die Verschwenkung der ersten Schiene unter Anhebung des vorderen Endes der ersten Schiene zumindest so weit blockiert ist, dass das Anschlagelement der in der ausgezogenen Stellung sich befindenden ersten Schiene in Eingriff mit dem Auszieh-Anschlag gehalten ist.

Ausziehführungen der eingangs genannten Art gehen aus der GB 1 335 776 B und GB 801 255 B hervor. Diese Ausziehführungen weisen eine erste Schiene in Form einer Ausziehschiene oder Ladenschiene, eine zweite Schiene in Form einer Mittelschiene und eine dritte Schiene in Form einer Korpusschiene auf und ist als Differentialausziehführung mit einer in einem mittleren Bereich der Mittelschiene drehbar gelagerten lastübertragenden Differentialrolle ausgebildet. Beim Ausziehen der Ausziehschiene aus der Mittelschiene wird dieses Ausziehen dadurch begrenzt, dass ein Anschlagelement der Ausziehschiene an einem Auszieh-Anschlag der Mittelschiene anschlägt. Wenn die Ausziehschiene aus der Mittelschiene ganz herausgenommen werden soll, so wird ein an der Mittelschiene drehbar gelagertes Sicherungsteil gegen die Kraft eines Federelements von einer Sperrstellung in eine Freigabestellung verdreht. In der Sperrstellung blockiert das Sicherungselement ein Anheben eines vorderen Endes der Ausziehschiene. In der Freigabestellung kann das vordere Ende der Ausziehschiene angehoben werden und dadurch kann das Anschlagelement der Ausziehschiene über den Auszieh-Anschlag der Mittelschiene hinweg geführt werden und die Ausziehschiene aus der Mittelschiene herausgenommen werden. In umgekehrter Weise kann die Ausziehschiene in die Mittelschiene eingesetzt werden, beispielsweise bei der Montage der Ausziehführung. Ein Nachteil besteht hierbei darin, dass zum Einsetzen einer Schublade, an welcher linke und rechte Ausziehschienen montiert sind, die Sicherungsteile beider Mittelschienen gleichzeitig gegen die Kraft des Federelements in die Freigabestellung verstellt werden müssen und in diesen Stellungen der Sicherungselemente die Schublade eingesetzt werden muss, was von einer Person nur schwer bewerkstelligt werden kann. Das Gleiche gilt für das Herausnehmen der Schublade mit den daran montierten Ausziehführungen aus den Mittelschienen.

Eine ähnliche Ausziehführung geht auch aus der GB 202,526 B hervor. Hier wird das Sicherungsteil aber nicht durch ein Federelement in die Sperrstellung beaufschlagt sondern ist reibschlüssig in der gerade vorliegenden Drehstellung um die Drehachse gehalten. Beim Schließen der Schublade fährt die Blende der Schublade an das Sicherungsteil an und verstellt dieses in die Sperrstellung. Hierzu müssen allerdings die Blende der Schublade und die Mittelschiene in genau der richtigen Relation zueinander montiert sein, andernfalls wird das Sicherungsteil beim Schließen der Schublade nicht korrekt in die Sperrstellung verstellt. In der Praxis ist eine solche genaue Relation bei der Montage der Ausziehführung an der Schublade aber nicht einfach einzuhalten. Z.B. bei Gefriermöbeln mit dicken Dichtlippen besteht hierbei auch das Problem, dass die Ausziehführung (mit Selbsteinzug) in Abhängigkeit von der Beladung die Dichtlippen unterschiedlich stark komprimiert und somit unterschiedliche Einstellungen vorliegen.

Ähnliches gilt für die aus der EP 1 795 088 A1 bekannten Ausziehführung. Das Sicherungsteil ist hier gegenüber einem Achszapfen verdrehbar und verschiebbar. Wenn die Blende der Schublade beim Schließen der Schublade an das Sicherungsteil anläuft, verschiebt diese das Sicherungsteil gegenüber dem Achszapfen, wodurch eine Schulter des Sicherungsteils und der Rückhaltefläche des Mittelschiene einrastet und das Sicherungsteil gegen eine Drehung um die Drehachse blockiert ist.

Auch bei der aus der GB 345,539 B bekannten Ausziehführung ist das Sicherungsteil um einen Achsbolzen verschwenkbar und verschiebbar. Wenn die Ausziehführung in der Freigabestellung des Sicherungsteils geschlossen wird, so läuft das Sicherungsteil an einen Flansch der Korpusschiene an und wird dadurch um die Drehachse in die Sperrstellung verschwenkt und gegenüber der Drehachse verschoben, sodass ein an der Mittelschiene angebrachter Zapfen in eine Ausnehmung des Sicherungsteils eingeschoben wird und das Sicherungsteil gegen eine Drehung um die Drehachse blockiert ist. Wenn aufgrund der Montage der Ausziehführung an der Schublade die Blende der Schublade am Möbelkorpus anschlägt, bevor die Ausziehschiene vollständig in die Mittelschiene eingeschoben ist, wird die Blockierung des Sicherungsteils gegen eine Drehung um die Drehachse nicht erreicht.

Aus der CH 679735 A5 und der US 4,065,196 A gehen Ausziehführungen hervor, bei welchen der Auszieh-Anschlag der Mittelschiene selbst verschwenkbar ist, um das Anschlagelement der Ausziehschiene am Auszieh-Anschlag der Mittelschiene vorbeiführen zu können. Eine weitere Ausziehführung wird in der US 4 765 699 A offenbart.

Aufgabe der Erfindung ist es eine vorteilhafte Ausziehführung der eingangs genannten Art bereitzustellen, die sich durch eine einfache Bedienung und zuverlässige Funktion auszeichnet. Erfindungsgemäß gelingt dies durch eine Ausziehführung mit den Merkmalen des Anspruchs 1.

Bei der Ausziehführung gemäß der Erfindung ist das Sicherungsteil an der zweiten Schiene über einen von der Sperrstellung bis zur Freigabestellung sich erstreckenden Verschiebeweg in eine Verschieberichtung, die mit der der Ausziehrichtung entgegengesetzten Richtung einen Winkel von weniger als 20°, vorzugsweise weniger als 10°, einschließt, verschiebbar gelagert. Hierbei nimmt die Verschwenkbarkeit der ersten Schiene gegenüber der zweiten Schiene unter Anhebung des vorderen Endes der ersten Schiene über den Verschiebeweg des Sicherungsteils ausgehend von der Sperrstellung bis in die Freigabestellung kontinuierlich zu, bis in der Freigabestellung des Sicherungsteils die erste Schiene unter Anhebung des vorderen Endes der ersten Schiene gegenüber der zweiten Schiene so weit verschwenkbar ist, dass das Anschlagelement der ersten Schiene außer Eingriff mit dem Auszieh-Anschlag der zweiten Schiene bringbar ist. Die erste Schiene kann damit vollständig aus der zweiten Schiene herausgenommen werden.

Wenn die erste Schiene in der ausgezogenen Stellung unter Anhebung des vorderen Endes der ersten Schiene verschwenkt wird, so erfolgt diese Verschwenkung um eine Achse, die von einem Abstützpunkt der ersten Schiene gegenüber der zweiten Schiene gebildet wird, wobei dieser Abstützpunkt insbesondere von einer Laufrolle der zweiten Schiene gebildet wird.

In einer zweckmäßigen Ausführungsform der Erfindung liegt die Verschieberichtung über den gesamten Verschiebeweg parallel zu Ausziehrichtung.

In einer anderen zweckmäßigen Ausführungsform der Erfindung ist die Verschieberichtung über den gesamten Verschiebeweg so gerichtet, dass das Sicherungsteil über den gesamten Verschiebeweg ausgehend von der Sperrstellung bis zur Freigabestellung gegenüber einer gedachten Verschiebung parallel zur Ausziehrichtung angehoben wird.

Vorzugsweise erfolgt die Verschiebung des Sicherungsteils über den gesamten Verschiebeweg geradlinig. Bei der Bewegung des Sicherungsteils handelt es sich dann günstigerweise um eine reine Translation.

Die Verschieberichtung könnte sich in einer weiteren möglichen Ausführungsform der Erfindung auch über den Verschiebeweg ändern, beispielsweise über einen ersten Abschnitt des Verschiebeweges ausgehend von der Sperrstellung parallel zu Ausziehrichtung liegen und über einen daran anschließenden Abschnitt des Verschiebewegs so gerichtet sein, dass das Sicherungsteil gegenüber einer gedachten Verschiebung parallel zur Ausziehrichtung angehoben wird. Dabei könnte die Bewegung des Sicherungsteils von der Sperrstellung in die Freigabestellung neben einer Translation auch eine gewisse Rotation, insbesondere um eine horizontale, rechtwinkelig zur Ausziehrichtung stehende Achse, umfassen. Eine solche Rotation würde aber vorzugsweise weniger als 5° betragen.

Wenn der Vertikalabstand zwischen einer Anlagefläche des Sicherungsteils und einem Horizontalsteg der ersten Schiene, der beim Verschwenken der ersten Schiene unter Anhebung des vorderen Endes der ersten Schiene in Anlage mit dieser Anlagefläche gelangt, zwischen der Sperrstellung und der Freigabestellung des Sicherungsteils gleich bleibt, kann die größere Verschwenkbarkeit des vorderen Endes der ersten Schiene gegenüber der zweiten Schiene allein durch den unterschiedlichen Abstand des Sicherungsteils von der Achse, um welche die Verschwenkung erfolgt, bewirkt werden.

Denkbar und möglich wäre es auch, dass der Abschnitt der ersten Schiene, welcher in der ausgezogenen Stellung der ersten Schiene und in der Freigabestellung des Sicherungsteils beim Verschwenken der ersten Schiene unter Anhebung des vorderen Endes der ersten Schiene in Anlage an die Anlagefläche gelangt, tiefer liegt als derjenige Abschnitt der ersten Schiene, der in der ausgezogenen Stellung der ersten Schiene und in der Sperrstellung des Sicherungsteils beim Verschwenken der ersten Schiene unter Anhebung des vorderen Endes der ersten Schiene in Anlage an die Anlagefläche des Sicherungsteils gelangt.

Vorzugsweise ist vorgesehen, dass sich der Verschiebeweg von der Sperrstellung des Sicherungsteils bis in die Freigabestellung des Sicherungsteils über mindestens ein Fünftel der Längserstreckung der zweiten Schiene erstreckt. Es kann vorgesehen sein, dass das Sicherungsteil zwischen der Sperrstellung und der Freigabestellung über mindestens ein Viertel oder sogar über mindestens ein Drittel der Längserstreckung der zweiten Schiene gegenüber der zweiten Schiene verschiebbar ist.

Eine mögliche Ausbildungsform der Erfindung sieht vor, dass sich das Sicherungsteil in der Sperrstellung in einem vorderen Drittel der Längserstreckung der zweiten Schiene befindet. In der Freigabestellung befindet sich das Sicherungsteil erfindungsgemäss in einem mittleren Drittel der Längserstreckung der zweiten Schiene. Eine solche Ausbildung ist insbesondere zweckmäßig, wenn die Verschieberichtung über den gesamten Verschiebeweg parallel zur Ausziehrichtung verläuft.

Die Verschiebbarkeit des Sicherungsteils gegenüber der zweiten Schiene ist entgegen der Verschieberichtung günstigerweise bei Erreichen der Sperrstellung durch einen Verschiebe-Anschlag begrenzt, wobei dieser Verschiebeanschlag in einer vorteilhaften Ausführungsform der Erfindung von einer Federzunge des Sperrteils gebildet wird, die mit einer an der zweiten Schiene angeordneten Anschlagfläche zusammenwirkt. Es kann dadurch eine einfache Montage und gegebenenfalls auch Demontage des Sicherungsteils an der zweiten Schiene bzw. von der zweiten Schiene ermöglicht werden.

In einer vorteilhaften Ausführungsform der Erfindung weist die Ausziehführung zusätzlich zur ersten und zweiten Schiene eine dritte Schiene auf, aus welcher die zweite Schiene ausziehbar ist und in die die zweite Schiene einschiebbar ist. Die zweite Schiene ist also zwischen der ersten und dritten Schiene angeordnet. Die dritte Schiene ist an einem Möbelkorpus anbringbar und die erste Schiene an einem ausziehbaren Möbelteil. Die dritte Schiene könnte auch als Korpusschiene, die zweite Schiene als Mittelschiene und die erste Schiene als Ausziehschiene (oder auch Ladenschiene) bezeichnet werden. Insbesondere ist bei einer solchen Ausbildung vorgesehen, dass beim Verfahren der ersten Schiene gegenüber der zweiten Schiene die zweite Schiene synchron gegenüber der dritten Schiene verfährt. Solche Ausziehführungen werden auch als Synchronauszüge oder Differentialauszüge bezeichnet. Günstigerweise weist hierbei die zweite Schiene in einem mittleren Bereich ihrer Längserstreckung eine drehbar gelagerte lastübertragende Differentialrolle auf, die ein Spiel in vertikaler Richtung gegenüber der zweiten Schiene besitzt und zwischen einer Laufbahn der ersten Schiene und einer Laufbahn der dritten Schiene abrollt. Solche Differentialausziehführungen sind grundsätzlich bekannt. Vorteilhafterweise sind hierbei alle Laufrollen an der Mittelschiene angeordnet.

Günstigerweise kann beim Einschieben der zweiten Schiene in die dritte Schiene ausgehend von einem Zustand, in welchem die zweite Schiene sich in der ausgezogenen Stellung befindet und das Sicherungsteil sich in der Freigabestellung befindet, ein Abschnitt der dritten Schiene, der sich vorzugsweise im Bereich des vorderen Endes der dritten Schiene befindet, an das Sicherungsteil anlaufen und beim Einschieben der zweiten Schiene in die eingeschobene Stellung das Sicherungsteil in die Sperrstellung verschieben. Das Sicherungsteil wird somit bei der Betätigung der Ausziehführung selbsttätig in die Sperrstellung gebracht.

Wenn in dieser Schrift von "vorne" und "hinten" die Rede ist, so ist dies auf die Ausziehrichtung bezogen.

Weitere Vorteile und Einzelheiten der Erfindung werden im Folgenden anhand der beiliegenden Zeichnung erläutert. In dieser zeigen:
- Fig. 1: eine Schrägsicht eines ersten Ausführungsbeispiels einer Ausziehführung gemäß der Erfindung, in der geschlossenen Stellung der Ausziehführung und Sperrstellung des Sicherungsteils;
- Fig. 2: eine Schrägsicht analog Fig. 1 in der geöffneten Stellung der Ausziehführung;
- Fig. 3: eine stirnseitige Ansicht der Ausziehführung, wobei Teile eines Möbelkorpus und eines ausziehbaren Möbelteils mit gestrichelten Linien angedeutet sind;
- Fig. 4 und 5: Schrägsichten der dritten Schiene aus verschiedenen Blickrichtungen;
- Fig. 6 und 7: Schrägsichten der zweiten Schiene aus verschiedenen Blickrichtungen, in der Sperrstellung des Sicherungsteils;
- Fig. 8: eine Schrägsicht der zweiten Schiene analog Fig. 6, aber in der Freigabestellung des Sicherungsteils;
- Fig. 9 und 10: Schrägsichten der ersten Schiene aus verschiedenen Blickrichtungen;
- Fig. 11 und 12: Seitenansichten der zweiten Schiene in der Sperrstellung und Freigabestellung des Sicherungsteils;
- Fig. 13 und 14: Schrägsichten des Sicherungsteils aus verschiedenen Blickrichtungen;
- Fig. 15: eine Ansicht des Sicherungsteils;
- Fig. 16 bis 19: Darstellungen der ersten und zweiten Schiene in Seitenansicht zur Erläuterung des Vorgangs des Aushängens der ersten Schiene aus der zweiten Schiene;
- Fig. 20: eine Seitenansicht der Ausziehführung beim Zusammenschieben der Ausziehführung bei zunächst in der Freigabestellung sich befindendem Sicherungsteil;
- Fig. 21 und 22: Darstellungen der ersten und zweiten Schiene analog zu den Fig. 16 und 17 für ein zweites Ausführungsbeispiel der Erfindung;
- Fig. 23: eine Seitenansicht in der ausgezogenen Stellung der ersten Schiene und in der Freigabestellung des Sicherungsteils;
- Fig. 24: eine Darstellung entsprechend Fig. 23, wobei die erste Schiene unter Anhebung des vorderen Endes der ersten Schiene gegenüber der zweiten Schiene verschwenkt ist.

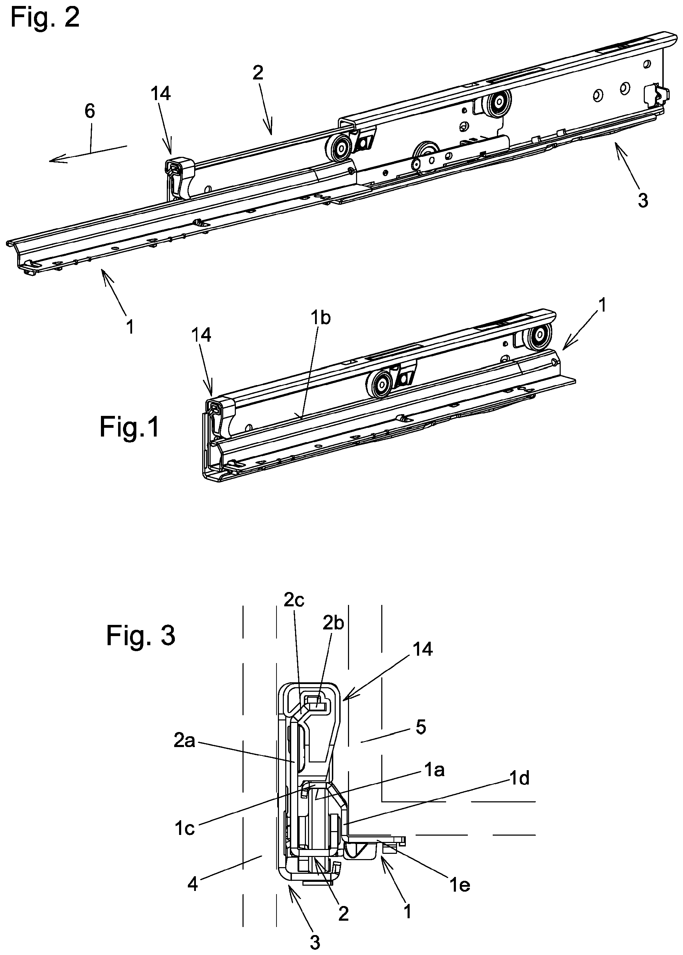

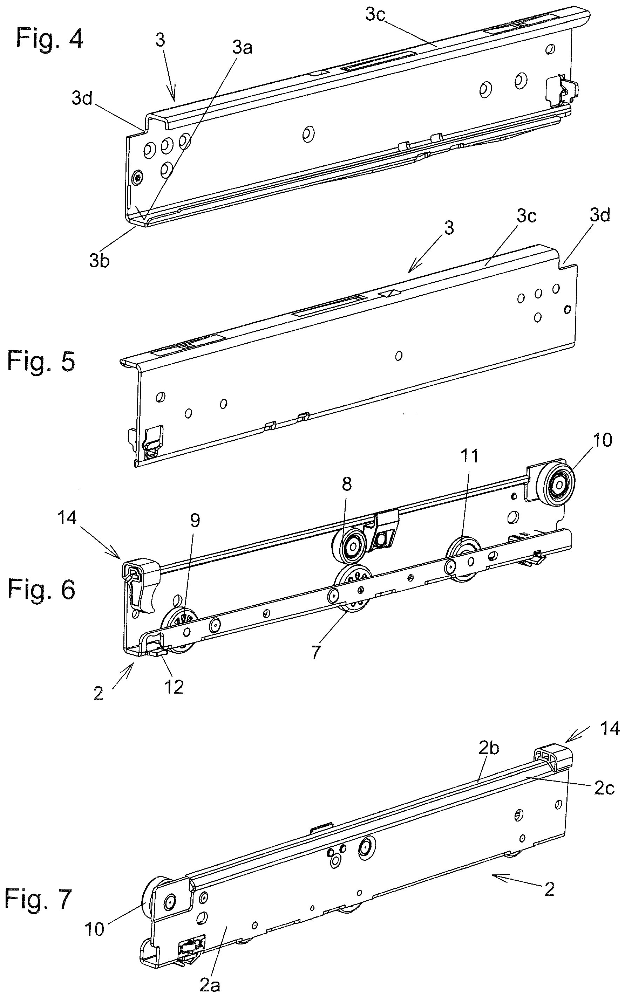

Ein erstes Ausführungsbeispiel einer Ausziehführung gemäß der Erfindung wird im Folgenden anhand der Fig. 1 bis 20 erläutert. Die Ausziehführung ist als Rollenauszug ausgebildet. Bei einem Rollenauszug sind Laufrollen, welche die gegenseitige verschiebbare Führung der Schienen bewirken, an den Schienen drehbar gelagert. Die Ausziehführung weist eine erste Schiene 1, eine zweite Schiene 2 und eine dritte Schiene 3 auf, wobei im Ausführungsbeispiel alle Laufrollen an der zweiten Schiene drehbar gelagert sind. Die dritte Schiene 3 dient zur Anbringung an einem Möbelkorpus 4, von dem lediglich in Fig. 3 ein Abschnitt mit gestrichelten Linien angedeutet ist. Die erste Schiene 1 dient zur Anbringung an einem ausziehbaren Möbelteil 5, beispielsweise einer Schublade, von welchem lediglich in Fig. 3 ein Abschnitt mit gestrichelten Linien angedeutet ist. Die dritte Schiene 3 könnte auch als Korpusschiene, die zweite Schiene 2 als Mittelschiene und die erste Schiene 1 als Ausziehschiene bezeichnet werden.

Das ausziehbare Möbelteil liegt im Ausführungsbeispiel auf einem Horizontalsteg 1e auf, der mit dem unteren Ende des Vertikalstegs 1d der ersten Schiene 1 verbunden ist. Der Horizontalsteg 1e könnte auch entfallen und das ausziehbare Möbelteil 5 könnte am Vertikalsteg 1d angebracht sein.

Die Schienen 1 - 3 sind synchron geführt, d.h. beim Ausziehen der ersten Schiene 1 aus der zweiten Schiene 2 in eine Ausziehrichtung 6 verschiebt sich synchron die zweite Schiene 2 gegenüber der dritten Schiene 3 in die Ausziehrichtung 6. Gegenüber der dritten Schiene 3 legt hierbei die zweite Schiene 2 jeweils die halbe Wegstrecke der ersten Schiene 1 zurück.

Zur synchronen Führung der Schienen 1 bis 3 dient eine an der zweiten Schiene 2 im mittleren Bereich ihrer Längserstreckung angeordnete drehbare Differentialrolle 7, welche zwischen einer an der Unterseite eines Horizontalstegs 1c der ersten Schiene 1 angeordneten, nach unten gerichteten Laufbahn 1a der ersten Schiene 1 und einer an der Oberseite eines unteren Horizontalstegs 3b der dritten Schiene 3 angeordneten, nach oben gerichteten Laufbahn 3a der dritten Schiene 3 abrollt und hierbei einen Teil der Last der ersten Schiene 1 direkt auf die dritte Schiene 3 überträgt. Die Differentialrolle 7 weist hierbei ein Spiel in vertikaler Richtung auf. Solche Auszüge sind als "Differentialauszüge" bekannt.

Der Horizontalsteg 1c ist mit dem oberen Ende des Vertikalstegs 1d der ersten Schiene 1 verbunden.

In einem mittleren Bereich der Längserstreckung der zweiten Schiene 2 oberhalb der Differentialrolle 7, im Ausführungsbeispiel gegenüber der Differentialrolle 7 etwas nach vorne versetzt, befindet sich eine Stützrolle 8, welche das hintere Ende der ersten Schiene 1 in der ausgezogenen Stellung der ersten Schiene 1 in die Richtung nach oben abstützen kann.

Im Ausführungsbeispiel sind wie bereits erwähnt alle Laufrollen an der zweiten Schiene 2 angeordnet, wie dies bei Differentialausziehführungen bevorzugt ist. Insbesondere befindet sich im Bereich des vorderen Endes der zweiten Schiene 2 eine mit der nach unten gerichteten Laufbahn 1a der ersten Schiene 1 und in der eingeschobenen Stellung der zweiten Schiene 2 mit der nach oben gerichteten Laufbahn 3a der dritten Schiene 3 zusammenwirkende Laufrolle 9 und in einem hinteren Bereich der zweiten Schiene 2 eine mit einer an der Unterseite eines oberen Horizontalstegs 3c der dritten Schiene 3 angeordneten, nach unten gerichteten Laufbahn der dritten Schiene 3 zusammenwirkende Laufrolle 10. Im Bereich zwischen der Differentialrolle 7 und dem hinteren Ende der zweiten Schiene 2 ist vorzugsweise eine Hilfsrolle 11 drehbar gelagert, welche das hintere Ende der ersten Schiene 1 in der eingeschobenen Stellung der ersten Schiene 1 nach unten abstützt.

Zur Begrenzung des Ausziehens der ersten Schiene 1 gegenüber der zweiten Schiene 2 in der ausgezogenen Stellung der ersten Schiene 1 dient ein Auszieh-Anschlag 12 der zweiten Schiene 2, an welchen ein Anschlagelement 13 der ersten Schiene in der ausgezogenen Stellung der ersten Schiene 1 anläuft. An der zweiten Schiene 2 ist im Weiteren ein Sicherungsteil 14 angeordnet, welches im Folgenden genauer erläutert wird und welches in einer Sperrstellung verhindert, dass das vordere Ende der ersten Schiene 1 so weit angehoben werden kann, dass das Anschlagelement 13 über den Auszieh-Anschlag 12 hinweggeführt werden kann.

Das Ausziehen der zweiten Schiene 2 gegenüber der dritten Schiene 3 sowie das Einschieben der ersten Schiene 1 in die zweite Schiene 2 und der zweiten Schiene 2 in die dritte Schiene 3 sind ebenfalls durch Anschläge begrenzt, welche gemäß dem Stand der Technik ausgebildet sein können und an dieser Stelle nicht genauer erläutert werden.

In der geschlossenen Stellung der Ausziehführung weist die erste Schiene 1 ihre eingeschobene Stellung auf, in welcher sie vollständig in die zweite Schiene 2 eingeschoben ist und weist die zweite Schiene 2 die eingeschobene Stellung auf, in welcher sie vollständig in die dritte Schiene 3 eingeschoben ist. In der geöffneten Stellung der Ausziehführung weist die erste Schiene 1 ihre ausgezogene Stellung auf, in welcher sie vollständig aus der zweiten Schiene 2 ausgezogen ist, und weist die zweite Schiene 2 ihre ausgezogene Stellung auf, in welcher sie vollständig aus der dritten Schiene 3 ausgezogen ist.

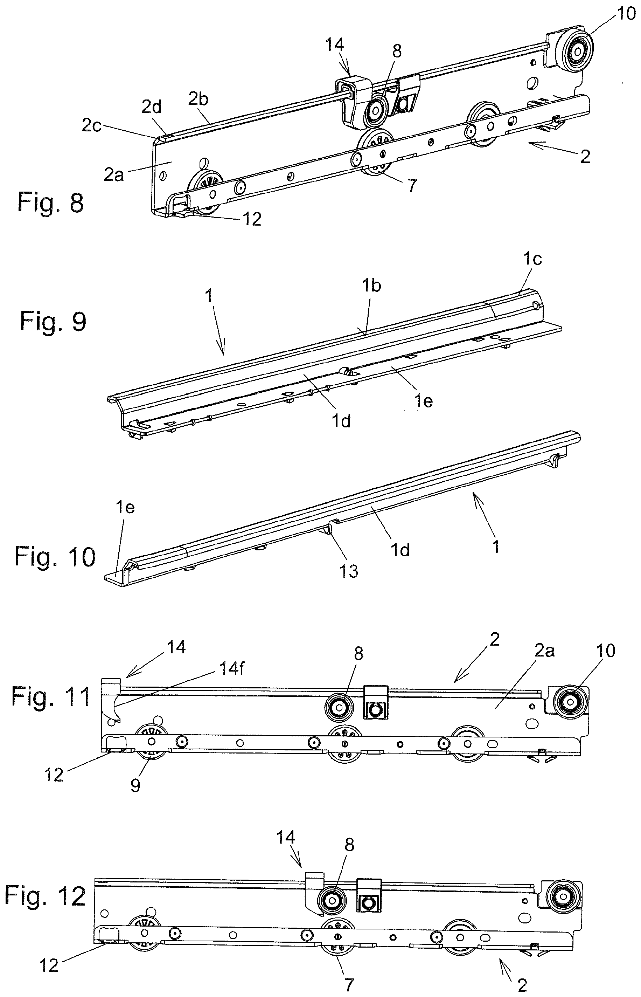

In einem oberen und vorderen Abschnitt der zweiten Schiene 2 ist ein Sicherungsteil 14 im Ausführungsbeispiel parallel zur Längserstreckung der zweiten Schiene 2, also parallel zur Ausziehrichtung 6 verschiebbar gelagert. In einer Sperrstellung befindet sich das Sicherungsteil 14 in diesem Ausführungsbeispiel im vorderen Drittel der Längserstreckung der zweiten Schiene 2, vorzugsweise direkt am vorderen Ende der zweiten Schiene 2. Diese Sperrstellung ist aus den Fig. 1, 2, 6, 7, 11, 16 und 17 ersichtlich. In einer Freigabestellung befindet sich das Sicherungsteil 14 im mittleren Drittel der Längserstreckung der zweiten Schiene 2. Das Sicherungsteil 14 kann hierbei wie dargestellt in der Freigabestellung an der Vorderseite der Stützrolle 8 anliegen. Die Freigabestellung ist aus den Fig. 8, 12, 18 und 19 ersichtlich.

Die Verschiebung des Sicherungsteils 14 von der Sperrstellung in die Freigabestellung erfolgt im Ausführungsbeispiel also geradlinig über einen Verschiebeweg in eine parallel zur Ausziehrichtung liegende und dieser entgegengesetzte Verschieberichtung 15. Die Verschieberichtung 15 liegt hierbei horizontal, wenn die Unterkante der zweiten Schiene 2 horizontal liegt (dies ist die Einsatzstellung der Ausziehführung).

Zur verschiebbaren Lagerung des Sicherungsteils 14 weist dieses einen das Sicherungsteil 14 parallel zur Verschieberichtung 15 durchsetzenden Kanal 14a auf, von dem ein oberer Abschnitt der zweiten Schiene 2 aufgenommen ist.

Im Ausführungsbeispiel weist die zweite Schiene 2 einen Vertikalsteg 2a auf, an welchem die Laufrollen 7-11 drehbar gelagert sind, einen oberen Horizontalsteg 2b und einen den oberen Horizontalsteg 2b mit dem Vertikalsteg 2a verbindenden schrägstehenden Verbindungssteg 2c. Der Kanal 14a nimmt den oberen Horizontalsteg 2b und den Verbindungssteg 2c auf.

Das Sicherungsteil 14 besitzt eine Federzunge 14b, welche innerhalb des Kanals 14a liegt. Abseits der Sperrstellung des Sicherungsteils 14 liegt die Federzunge 14b auf der Oberseite des oberen Horizontalstegs 2b der zweiten Schiene 2 auf und ist federelastisch an diesen angedrückt. Durch diese Federzunge 14b wird somit die Reibungskraft erhöht, welche zur Verschiebung des Sicherungsteils 14 gegenüber der zweiten Schiene 2 überwunden werden muss. Es wird dadurch auch eine gewisse Halterung des Sicherungsteils 14 in der Freigabestellung erreicht. In der Sperrstellung des Sicherungsteils 14 greift die Federzunge 14b in eine Öffnung 2d (in Fig. 8 ersichtlich) im Horizontalsteg 2b der zweiten Schiene 2 ein. Die mit ihrem Ende zum vorderen Ende der zweiten Schiene 2 gerichtete Federzunge 14b liegt hierbei in der Sperrstellung des Sicherungsteils 14 am vorderen Ende dieser Öffnung 2d im oberen Horizontalsteg 2b der zweiten Schiene 2 an, welches eine Anschlagfläche bildet, welche die Verschiebung des Sicherungsteils 14 gegenüber der zweiten Schiene 2 in die Ausziehrichtung 6 begrenzt. Es wird dadurch ein Verschiebe-Anschlag zur Begrenzung der Verschiebung des Sicherungsteils 14 gegenüber der zweiten Schiene 2 in die Ausziehrichtung 6 ausgebildet.

Wenn eine vollständige Demontage des Sicherungsteils 14 von der zweiten Schiene 2 gewünscht ist, so kann die Federzunge 14b angehoben werden (durch die Öffnung 2d im Vertikalsteg 2a hindurch), um sie außer Eingriff mit der Anschlagfläche zu bringen. Bei der Montage des Sicherungsteils 14 auf der zweiten Schiene 2 wird die Federzunge 14b beim Aufschieben des Sicherungsteils 14 auf das vordere Ende der zweiten Schiene 2 selbsttätig angehoben.

Anstelle einer Öffnung könnte auch eine Vertiefung in der zweiten Schiene 2 vorgesehen sein, deren vorderes Ende die Anschlagfläche bildet.

Die Federzunge könnte auch außerhalb des Kanals 14a angeordnet sein und beispielsweise auch gegen die Unterseite des oberen Horizontalstegs 2b oder gegen eine Seitenfläche des Vertikalstegs 2a drücken, wenn sich das Sicherungsteil 14 außerhalb der Sperrstellung befindet.

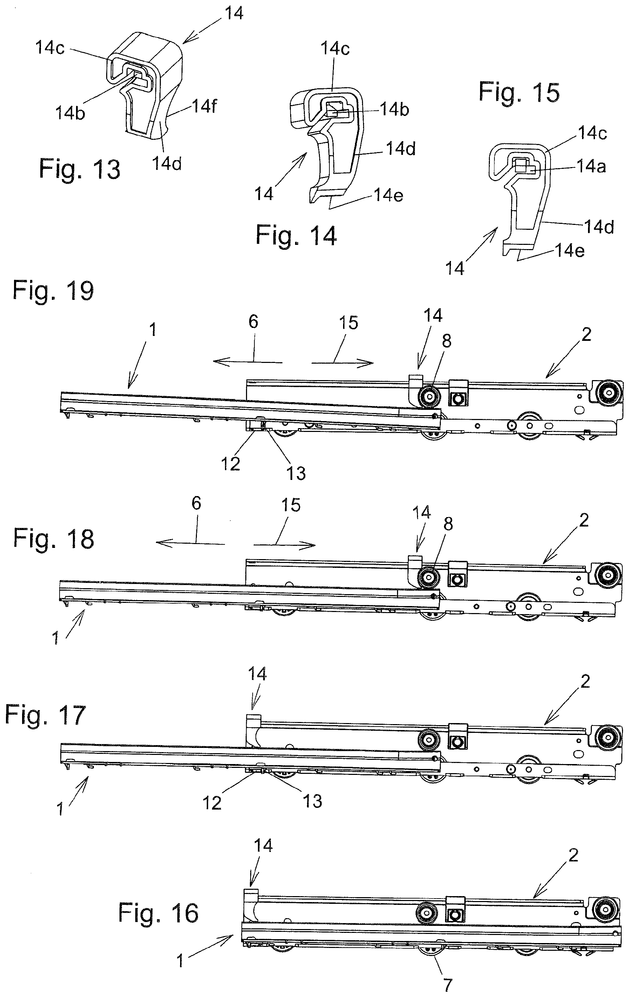

Der Kanal 14a befindet sich in einem Kopfabschnitt 14c des Sicherungsteils 14. Von diesem steht ein Armfortsatz 14d des Sicherungsteils 14 nach unten ab. Das untere Ende dieses Armfortsatzes 14d bildet eine Anlagefläche 14e. Diese wirkt mit einer Abstützfläche 1b der ersten Schiene 1 zusammen, welche von der Oberseite des Horizontalstegs 1c der ersten Schiene 1 gebildet wird. Der Horizontalsteg 1c der ersten Schiene 1 erstreckt sich in einer horizontalen Seitenansicht rechtwinkelig zur Ausziehrichtung gesehen, wenn das vordere Ende der ersten Schiene 1 nicht angehoben ist, parallel zur Ausziehrichtung 6, vgl. Fig. 15 und 16.

Wird in der ausgezogenen Stellung der ersten Schiene 1 die erste Schiene 1 gegenüber der zweiten Schiene 2 verschwenkt, wobei das vordere Ende der ersten Schiene 1 angehoben wird, so gelangt die Abstützfläche 1b der ersten Schiene 1 in Anlage an die Anlagefläche 14e. Die Verschwenkung der ersten Schiene 1 unter Anhebung des vorderen Endes der ersten Schiene 1 erfolgt um den Auflagepunkt der Laufbahn 1a auf der Differentialrolle 7 als Achse. In der Sperrstellung des Sicherungsteils 14 ist die Verschwenkung der ersten Schiene 1 gegenüber der zweiten Schiene 2 unter Anhebung des vorderen Endes der ersten Schiene 1 nur so weit möglich, dass das Anschlagelement 13 der ersten Schiene 1 in Eingriff mit dem Auszieh-Anschlag 12 der zweiten Schiene 2 bleibt.

Wird das Sicherungsteil 14 an der zweiten Schiene 2 ausgehend von der Sperrstellung in die Verschieberichtung verschoben, also entgegen der Ausziehrichtung 6 zurückgeschoben, so verringert sich der vertikale Weg, welcher der mit der Anlagefläche 14e des Sicherungsteils 14 jeweils zusammenwirkende Abschnitt der Abstützfläche 1b der ersten Schiene 1 bei einem gleich weiten Anheben des vorderen Endes der ersten Schiene 1 (also bei einem gleichen Winkel der Verschwenkung) zurücklegt. D.h. wenn der Horizontalsteg 1c im nicht angehobenen Zustand der ersten Schiene 1 über seine Längserstreckung einen konstanten Vertikalabstand vom unteren Ende des Sicherungsteils 14 aufweist, so kann das vordere Ende der ersten Schiene 1 umso weiter angehoben werden, je weiter das Sicherungsteil 14 gegenüber der zweiten Schiene 2 nach hinten verschoben ist. Zumindest in der Freigabestellung des Sicherungsteils 14 kann das vordere Ende der ersten Schiene 1 so weit angehoben werden, dass das Anschlagelement 13 der ersten Schiene 1 über den Auszieh-Anschlag 12 der zweiten Schiene 2 hinweg bewegt werden kann.

Das Herausnehmen der ersten Schiene 1 aus der zweiten Schiene 2 ist in den Fig. 16 bis 19 dargestellt. Ausgehend von Fig. 16, in welcher sich die erste Schiene in ihrer eingeschobenen Stellung befindet, wird die erste Schiene 1 in ihre ausgezogene Stellung ausgezogen, in welcher das Anschlagelement 13 der ersten Schiene 1 an den Auszieh-Anschlag 12 der zweiten Schiene 2 anschlägt, vgl. Fig. 17. Das Sicherungsteil 14 befindet sich hierbei in der Sperrstellung. Das Sicherungsteil 14 wird in der Folge in die Freigabestellung zurückgeschoben, vgl. Fig. 18. Das vordere Ende der ersten Schiene 1 wird nunmehr angehoben und das Anschlagelement 13 der ersten Schiene 1 über den Auszieh-Anschlag 12 der zweiten Schiene 2 hinweg geführt, vgl. Fig. 19. Damit kann die erste Schiene 1 vollständig von der zweiten Schiene 2 abgezogen (= aus der zweiten Schiene 2 herausgenommen) werden.

In umgekehrter Weise kann die von der zweiten Schiene 1 abgenommene erste Schiene 1 in die zweite Schiene 2 eingesetzt werden, wenn sich das Sicherungsteil 14 in der Freigabestellung befindet. Mit angehobenem vorderen Ende der ersten Schiene 1 wird das hintere Ende der ersten Schiene 1 zwischen die Differentialrolle 7 und die Stützrolle 8 eingeführt, wobei das Anschlagelement 13 der ersten Schiene 1 über den Auszieh-Anschlag 12 der zweiten Schiene 2 hinweg bewegt wird.

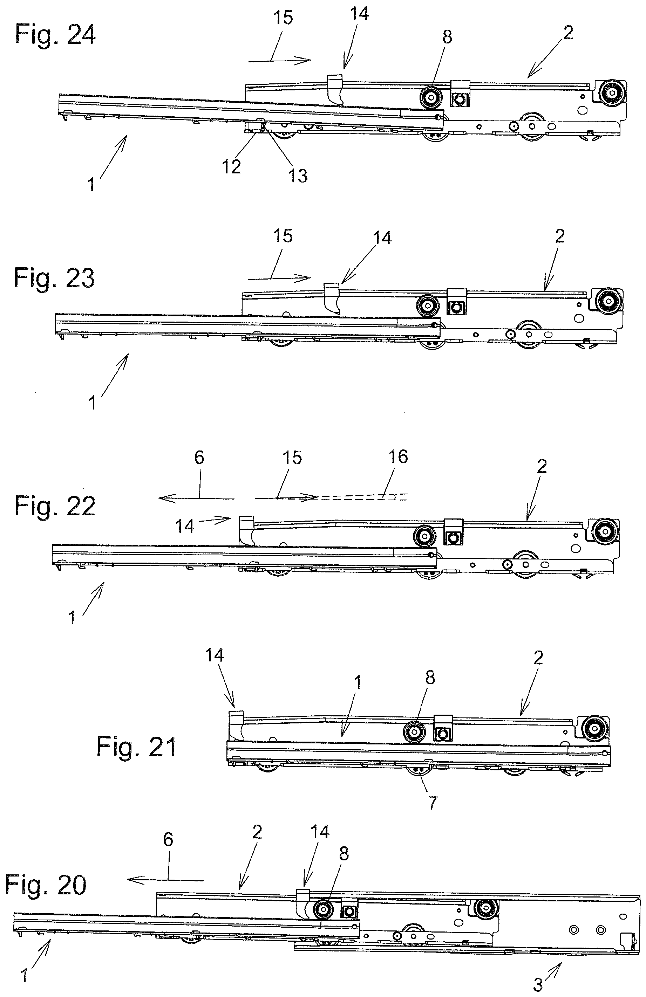

Beim Einsetzen der ersten Schiene 1 in die zweite Schiene 2 wird hierbei üblicherweise die zweite Schiene 2 in die dritte Schiene 3 eingesetzt sein und sich in ihrer ausgezogenen Stellung befinden. Das Verstellen des Sicherungsteils 14 von der Freigabestellung in die Sperrstellung kann damit selbsttätig erfolgen, wenn die zweite Schiene 2 in die dritte Schiene 3 eingesetzt ist und die Ausziehführung vollständig geschlossen wird. Wie in Fig. 20 dargestellt, läuft hierbei das vordere Ende eines oberen Abschnitts der dritten Schiene 3 an den Kopfabschnitt 14c des Sicherungsteils 14 an und beim Einschieben der zweiten Schiene 2 in die dritte Schiene 3 wird das Sicherungsteil 14 hierdurch in die Sperrstellung verschoben.

Der obere Abschnitt der dritten Schiene 3 weist am vorderen Ende der dritten Schiene 3 einen Ausschnitt 3d auf, welcher das Sicherungsteil 14 in der geschlossenen Stellung der Ausziehführung aufnimmt. Die zweite Schiene 2 kann dadurch vollständig in die dritte Schiene 3 eingeschoben werden.

Die Rückseite des Armfortsatzes 14a des Sicherungsteils 14 weist eine teilzylindrische Einbuchtung 14f auf, in welcher in der Freigabestellung des Sicherungsteils 14 ein vorderer Abschnitt der Stützrolle 8 aufgenommen ist. Die Anlagefläche 14e kann damit möglichst nahe zum Auflagepunkt des oberen Horizontalstegs 1c auf der Differentialrolle 7 gebracht werden. Dadurch kann das Spiel, um welches das vordere Ende der ersten Schiene 1 in der Sperrstellung des Sicherungsteils 14 angehoben werden kann, klein gehalten werden.

Durch das in der Freigabestellung sich befindende Sicherungsteil 14 wird auch ein Schutz der Stützrolle 8 vor einer Beschädigung durch die erste Schiene 1 erwirkt, wenn beim Einsetzen der ersten Schiene 1 in die zweite Schiene 2 die erste Schiene 1 zu hoch angesetzt wird und die erste Schiene 1 mit ihrer Vorderkante gegen die Stützrolle 8 anlaufen würde, wenn das Sicherungsteil nicht vorhanden wäre. Bei herkömmlichen Ausziehführungen ohne ein erfindungsgemäßes Sicherungsteil wird üblicherweise im Bereich vor der Stützrolle eine Blechzunge aus dem Profil der zweiten Schiene ausgestanzt und aufgebogen, welche zum Schutz der Stützrolle dient. Eine solche erübrigt sich hier.

Ein zweites Ausführungsbeispiel der Erfindung wird im Folgenden anhand der Fig. 21 bis 24 erläutert. Abgesehen von den im Folgenden beschriebenen Unterschieden entspricht die Ausbildung des zweiten Ausführungsbeispiels grundsätzlich derjenigen des ersten Ausführungsbeispiels und die Beschreibung des ersten Ausführungsbeispiels und der möglichen Modifikationen hierzu ist insoweit in analoger Weise heranziehbar.

In den Fig. 21 bis 24 sind analog zu den Fig. 16 bis 19 nur die erste Schiene 1 und die zweite Schiene 2 dargestellt. Die dritte Schiene 3 ist gleich wie im ersten Ausführungsbeispiel ausgebildet.

Der Unterschied dieses Ausführungsbeispiels gegenüber dem zuvor beschriebenen ersten Ausführungsbeispiel besteht im Wesentlichen darin, dass das Sicherungsteil in der Freigabestellung weniger weit nach hinten geschoben ist und dass die Verschieberichtung 15, in welche die Verschiebung des Sicherungsteils 14 bei der Verschiebung von der Sperrstellung in die Freigabestellung erfolgt, winkelig zur Ausziehrichtung 6 steht. Die Verschieberichtung 15 ist hierbei so ausgerichtet, dass sich das Sicherungsteil 14 bei der Verschiebung von der Sperrstellung in die Freigabestellung bei horizontal liegender Unterkante der zweiten Schiene 2, also bei horizontal liegender Ausziehrichtung 6, etwas nach oben bewegt. Der Winkel 16 zwischen der der Ausziehrichtung 6 entgegengesetzten Richtung und der Verschieberichtung 15 beträgt hierbei weniger als 20°, vorzugsweise weniger als 10°. Dieser Winkel 16 kann 5° oder weniger betragen.

Die schräg stehende Ausrichtung der Verschieberichtung 15 wird im Ausführungsbeispiel dadurch erreicht, dass der obere Rand des Vertikalstegs 2a von vorne nach hinten über den Bereich, über welchen das Sicherungsteil 14 bei der Verstellung von der Sperrstellung in die Freigabestellung verschoben wird, ansteigt. Damit liegt die Anlagefläche 14e in der Freigabestellung höher als in der Sperrstellung des Sicherungsteils 14 und somit vergrößert sich der vertikale Abstand der Anlagefläche 14e des Sicherungsteils 14 vom Horizontalsteg 1c der ersten Schiene 1 von der Sperrstellung bis zur Freigabestellung kontinuierlich. Die Verschwenkbarkeit der ersten Schiene 1 gegenüber der zweiten Schiene 2 unter Anhebung des vorderen Endes der ersten Schiene 1 nimmt damit über den Verschiebeweg des Sicherungsteils ausgehend von der Sperrstellung bis in die Freigabestellung kontinuierlich zu. Im Ausführungsbeispiel, in welchem die Verschiebung des Sicherungsteils über den gesamten Verschiebeweg von der Sperrstellung bis in die Freigabestellung geradlinig verläuft, ist die Verschwenkbarkeit der ersten Schiene 1 gegenüber der zweiten Schiene 2 unter Anhebung des vorderen Endes der ersten Schiene 1 proportional zum zurückgelegten Verschiebeweg ausgehend von der Sperrstellung.

In diesem Ausführungsbeispiel befindet sich das Sicherungsteil 14 in der Sperrstellung wiederum im Bereich des vorderen Endes der zweiten Schiene 2. In der Freigabestellung befindet es sich in diesem Ausführungsbeispiel aber in einem mittleren Bereich zwischen dem vorderen Ende der zweiten Schiene 2 und der Stützrolle 8. Das Sicherungsteil könnte sich aber in der Freigabestellung demgegenüber weiter hinten befinden, auch so weit hinten, dass es sich in Anlage an der Stützrolle 8 befindet.

Fig. 21 zeigt den eingeschobenen Zustand der ersten Schiene 1 und Fig. 22 zeigt den ausgezogenen Zustand der ersten Schiene 1, wobei das Sicherungsteil sich in der Sperrstellung befindet. In Fig. 23 ist das Sicherungsteil in die Verschieberichtung bis in die Freigabestellung verschoben. In Fig. 24 ist die erste Schiene 1 unter Anhebung des vorderen Endes der ersten Schiene 1 bis zur Anlage der Abstützfläche 1b der ersten Schiene 1 an der Anlagefläche 14e des Sicherungsteils 14 verschwenkt, so dass das Anschlagelement 13 über den Auszieh-Anschlag hinweg bewegt werden kann.

In einer weiteren modifizierten Ausführungsform der Erfindung könnte ausgehend von der Sperrstellung des Sicherungsteils 14 auch zunächst ein parallel zur Ausziehrichtung, insbesondere horizontal, sich erstreckender Abschnitt des Verschiebewegs vorgesehen sein, an den ein ansteigender Abschnitt des Verschiebewegs anschließt, über welchen also die Verschieberichtung einen Winkel 16 ungleich 0° mit der der Ausziehrichtung 6 entgegengesetzten Richtung einschließt.

Denkbar und möglich ist es auch, dass sich der Anstieg des Verschiebewegs von vorne nach hinten ändert, also z.B. zunächst anschließend an die Sperrstellung ein parallel zur Ausziehrichtung liegender Abschnitt des Verschiebewegs vorliegt, welcher kontinuierlich in einen ansteigenden Abschnitt des Verschiebewegs übergeht.

Der Vorteil eines anschließend an die Sperrstellung parallel zur Ausziehrichtung 6 liegenden Abschnitts des Verschiebewegs 15 besteht darin, dass die Gefahr einer ungewollten Verschiebung des Sicherungsteils 14 ausgehend von der Sperrstellung in Richtung der Freigabestellung, beispielsweise durch wiederholtes Anheben des vorderen Endes der ersten Schiene 1, verringert wird. Entsprechend könnte sogar vorgesehen sein, dass ein allererster Abschnitt des Verschiebewegs 15 ausgehend von der Sperrstellung in Richtung zur Freigabestellung zunächst leicht abfallend ausgebildet ist und dann in einen horizontal verlaufenden Abschnitt des Verschiebewegs übergeht, an den eventuell ein ansteigend verlaufenden Abschnitt des Verschiebewegs anschließt, oder gleich in einen ansteigend verlaufenden Abschnitt des Verschiebewegs übergeht.

### Legende

### Zu den Hinweisziffern

| | | | |
|---|---|---|---|
| 1 | erste Schiene | 14d | Armfortsatz |
| 1a | Laufbahn | 14e | Anlagefläche |
| 1b | Abstützfläche | 14f | Einbuchtung |
| 1c | Horizontalsteg | 15 | Verschieberichtung |
| 1d | Vertikalsteg | 16 | Winkel |
| 1e | Horizontalsteg | | |
| 2 | zweite Schiene | | |
| 2a | Vertikalsteg | | |
| 2b | oberer Horizontalsteg | | |
| 2c | Verbindungssteg | | |
| 2d | Öffnung | | |
| 3 | dritte Schiene | | |
| 3a | Laufbahn | | |
| 3b | unterer Horizontalsteg | | |
| 3c | oberer Horizontalsteg | | |
| 3d | Ausschnitt | | |
| 4 | Möbelkorpus | | |
| 5 | ausziehbares Möbelteil | | |
| 6 | Ausziehrichtung | | |
| 7 | Differentialrolle | | |
| 8 | Stützrolle | | |
| 9 | Laufrolle | | |
| 10 | Laufrolle | | |
| 11 | Hilfsrolle | | |
| 12 | Auszieh-Anschlag | | |
| 13 | Anschlagelement | | |
| 14 | Sicherungsteil | | |
| 14a | Kanal | | |
| 14b | Federzunge | | |
| 14c | Kopfabschnitt | | |

## Patentansprüche

1. Ausziehführung zum Ausziehen eines ausziehbaren Möbelteils (5) aus einem Möbelkorpus (4), mit einer ersten Schiene (1) und einer zweiten Schiene (2), wobei die erste Schiene (1) aus der zweiten Schiene (2) in eine Ausziehrichtung (6) ausgehend von einer eingeschobenen Stellung in eine ausgezogene Stellung ausziehbar ist, in welcher ein weiteres Ausziehen der ersten Schiene (1) aus der zweiten Schiene (2) durch Anschlägen eines Anschlagelements (13) der ersten Schiene (1) an einem Auszieh-Anschlag (12) der zweiten Schiene (2) begrenzt ist, und wobei an der zweiten Schiene (2) ein Sicherungsteil (14) beweglich gelagert ist, welches zwischen einer Freigabestellung, in welcher zum vollständigen Herausnehmen der ersten Schiene (1) aus der zweiten Schiene (2) ausgehend von der ausgezogenen Stellung der ersten Schiene (1) die erste Schiene (1) unter Anhebung des vorderen Endes der ersten Schiene (1) gegenüber der zweiten Schiene (2) so weit verschwenkbar ist, dass das Anschlagelement (13) der ersten Schiene (1) außer Eingriff mit dem Auszieh-Anschlag (12) der zweiten Schiene (2) bringbar ist und über den Auszieh-Anschlag (12) der zweiten Schiene (2) hinweg bewegbar ist, und einer Sperrstellung verstellbar ist, in welcher die Verschwenkung der ersten Schiene (1) unter Anhebung des vorderen Endes der ersten Schiene (1) zumindest so weit blockiert ist, dass das Anschlagelement (13) der in der ausgezogenen Stellung sich befindenden ersten Schiene (1) in Eingriff mit dem Auszieh-Anschlag (12) gehalten ist, wobei das Sicherungsteil (14) an der zweiten Schiene (2) über einen von der Sperrstellung bis in die Freigabestellung sich erstreckenden Verschiebeweg in eine Verschieberichtung (15), die mit der der Ausziehrichtung (6) entgegengesetzten Richtung einen Winkel (16) von weniger als 20°, vorzugsweise weniger als 10°, einschließt, verschiebbar gelagert ist, wobei die Verschwenkbarkeit der ersten Schiene (1) gegenüber der zweiten Schiene (2) unter Anhebung des vorderen Endes der ersten Schiene (1) über den Verschiebeweg des Sicherungsteils (14) ausgehend von der Sperrstellung bis in die Freigabestellung kontinuierlich zunimmt und wobei sich das Sicherungsteil (14) in der Sperrstellung im Bereich des vorderen Endes der zweiten Schiene (2) befindet und in einer Freigabestellung im mittleren Drittel der Längserstreckung der zweiten Schiene (2), wobei die Verschiebung des Sicherungsteils (14) von der Sperrstellung in die Freigabestellung entgegen der Ausziehrichtung (6) erfolgend ist.

2. Ausziehführung nach Anspruch 1, **dadurch gekennzeichnet, dass** sich das Sicherungsteil (14) in der Sperrstellung direkt am vorderen Ende der zweiten Schiene (2) befindet.

3. Ausziehführung nach Anspruch 1 oder 2, **dadurch gekennzeichnet, dass** die Verschiebbarkeit des Sicherungsteils (14) gegenüber der zweiten Schiene (2) entgegen der Verschieberichtung (15) bei Erreichen der Sperrstellung durch einen Verschiebe-Anschlag begrenzt ist.

4. Ausziehführung nach Anspruch 3, **dadurch gekennzeichnet, dass** zur Ausbildung des Verschiebe-Anschlags das Sicherungsteil (14) eine Federzunge (14b) aufweist, die mit einer an der zweiten Schiene (2) angeordneten Anschlagfläche zusammenwirkt.

5. Ausziehführung nach Anspruch 4, **dadurch gekennzeichnet, dass** die Federzunge (14b) abseits der Sperrstellung federelastisch an eine parallel zur Verschieberichtung (15) sich erstreckende Oberfläche der zweiten Schiene (2) angedrückt ist.

6. Ausziehführung nach Anspruch 4 oder 5, **dadurch gekennzeichnet, dass** das Sicherungsteil (14) einen das Sicherungsteil (14) parallel zur Verschieberichtung (15) durchsetzenden Kanal (14a) aufweist, von dem ein oberer Abschnitt der zweiten Schiene (2) aufgenommen ist, wobei die Federzunge (14b) des Sicherungsteils (14) innerhalb des Kanals angeordnet ist.

7. Ausziehführung nach einem der Ansprüche 1 bis 6, **dadurch gekennzeichnet, dass** die Ausziehführung eine dritte Schiene (3) aufweist, wobei die zweite Schiene (2) in die Ausziehrichtung (6) aus der dritten Schiene (3) ausgehend von einer eingeschobenen Stellung in eine ausgezogene Stellung ausziehbar ist, wobei in der eingeschobenen Stellung der ersten und zweiten Schiene (1, 2) eine geschlossene Stellung der Ausziehführung und in der ausgezogenen Stellung der ersten und zweiten Schiene (1, 2) eine geöffnete Stellung der Ausziehführung vorliegt und wobei vorzugsweise beim Verfahren der ersten Schiene (1) gegenüber der zweiten Schiene (2) die zweite Schiene (2) synchron gegenüber der dritten Schiene (3) verfährt.

8. Ausziehführung nach Anspruch 7, **dadurch gekennzeichnet, dass** die zweite Schiene (2) eine drehbar gelagerte lastübertragende Differentialrolle (7) aufweist, die ein Spiel in vertikaler Richtung gegenüber der zweiten Schiene (2) besitzt und zwischen einer Laufbahn (la) der ersten Schiene (1) und einer Laufbahn (3a) der dritten Schiene (3) abrollt.

9. Ausziehführung nach Anspruch 6 oder 7 , **dadurch gekennzeichnet, dass** beim Einschieben der zweiten Schiene (2) in die dritte Schiene (3) ausgehend von einem Zustand, in welchem die zweite Schiene (2) sich in der ausgezogenen Stellung befindet und das Sicherungsteil (14) sich in der Freigabestellung befindet, ein Abschnitt der dritten Schiene (3) an das Sicherungsteil (14) anläuft und beim Einschieben der zweiten Schiene (2) in die eingeschobene Stellung das Sicherungsteil (14) in die Sperrstellung verschiebt.

10. Ausziehführung nach Anspruch 8 oder 9, **dadurch gekennzeichnet, dass** das Sicherungsteil (14) in der Freigabestellung mit einer Rückseite an einer oberhalb der Differentialrolle (7) angeordneten Stützrolle (8) anliegt.

11. Ausziehführung nach Anspruch 10, **dadurch gekennzeichnet, dass** die Rückseite des Sicherungsteils (14) eine Einbuchtung (14f) aufweist, welche in der Freigabestellung des Sicherungsteils (14) einen vorderen Abschnitt der Stützrolle (8) aufnimmt.

12. Ausziehführung nach einem der Ansprüche 1 bis 11, **dadurch gekennzeichnet, dass** das Sicherungsteil (14) eine Anlagefläche (14e) aufweist, mit welcher es beim Verschwenken der ersten Schiene (1) gegenüber der zweiten Schiene (2) unter Anhebung des vorderen Endes der ersten Schiene (1) an einer Abstützfläche (1b), welche von der Oberseite eines Horizontalstegs (1c) der ersten Schiene (1) gebildet wird, zur Anlage kommt, wobei sich dieser Horizontalsteg (1c) der ersten Schiene (1) ohne Verschwenken der ersten Schiene (1) gegenüber der zweiten Schiene (2) unter Anhebung des vorderen Endes der ersten Schiene (1) vorzugsweise parallel zur Ausziehrichtung (6) erstreckt.

13. Ausziehführung nach einem der Ansprüche 1 bis 12, **dadurch gekennzeichnet, dass** die Verschieberichtung (15) parallel zur Ausziehrichtung (6) liegt.

14. Ausziehführung nach einem der Ansprüche 1 bis 13, **dadurch gekennzeichnet, dass** die Verschwenkbarkeit der ersten Schiene (1) gegenüber der zweiten Schiene (2) unter Anhebung des vorderen Endes der ersten Schiene (1) über den Verschiebeweg des Sicherungsteils (14) ausgehend von der Sperrstellung bis in die Freigabestellung proportional zum zurückgelegten Verschiebeweg zunimmt.

15. Ausziehführung nach einem der Ansprüche 1 bis 14, **dadurch gekennzeichnet, dass** sich der Verschiebeweg von der Sperrstellung des Sicherungsteils (14) bis in die Freigabestellung des Sicherungsteils (14) über mindestens ein Fünftel der Längserstreckung der zweiten Schiene erstreckt.

## Claims

1. Pull-out guide for pulling out an extendable furniture part (5) from a furniture body (4), with a first rail (1) and a second rail (2), wherein the first rail (1) can be pulled out of the second rail (2) in a pull-out direction (6) starting from an inserted position into an extended position, in which a further extraction of the first rail (1) from the second rail (2) is limited by abutment of an abutment element (13) of the first rail (1) against an pull-out abutment (12) of the second rail (2), and wherein a securing part (14) is movably mounted on the second rail (2), which can be pivoted between a release position, in which the first rail (1) can be completely removed from the second rail (2) starting from the pulled-out position of the first rail (1), while raising the front end of the first rail (1) relative to the second rail (2) to such an extent, that the stop element (13) of the first rail (1) can be brought out of engagement with the pull-out abutment (12) of the second rail (2) and can be moved beyond the pull-out abutment (12) of the second rail (2), and can be adjusted to a locked position, in which the pivoting of the first rail (1) is blocked while raising the front end of the first rail (1) at least to such an extent that the stop element (13) of the first rail (1) located in the extended position is held in engagement with the pull-out abutment (12), wherein the securing part (14) is displaceably mounted on the second rail (2) via a displacement movement extending from the locking position into the release position in a displacement direction (15) which forms an angle (16) of less than 20°, preferably less than 10°, with the direction opposite to the pull-out direction (6), wherein the pivotability of the first rail (1) relative to the second rail (2) increases continuously, raising the front end of the first rail (1) over the displacement movement of the securing part (14), starting from the locking position and extending into the release position, and wherein the securing part (14) is located in the region of the front end of the second rail (2) in the locking position and in the middle third of the longitudinal extent of the second rail (2) in a release position, wherein the displacement of the securing part (14) from the locking position into the release position is effected in the opposite direction to the pull-out direction (6).

2. Pull-out guide according to claim 1, **characterized in that** the securing part (14) is located directly at the front end of the second rail (2) in the locking position.

3. Pull-out guide according to claim 1 or 2, **characterized in that** the displaceability of the securing part (14) relative to the second rail (2) against the direction of displacement (15) is limited by a displacement stop when the locking position is reached.

4. Pull-out guide according to claim 3, **characterized in that**, to form the sliding stop, the securing part (14) has a spring tongue (14b) which interacts with a stop surface arranged on the second rail (2).

5. Pull-out guide according to claim 4, **characterized in that** the spring tongue (14b) is pressed resiliently against a surface of the second rail (2) extending parallel to the direction of displacement (15) away from the locking position.

6. Pull-out guide according to claim 4 or 5, **characterized in that** the securing part (14) has a channel (14a) which passes through the securing part (14) parallel to the direction of displacement (15) and which receives an upper section of the second rail (2), the spring tongue (14b) of the securing part (14) being arranged inside the channel.

7. Pull-out guide according to one of claims 1 to 6, **characterized in that** the pull-out guide has a third rail (3), wherein the second rail (2) can be pulled out of the third rail (3) in the pull-out direction (6) starting from a pushed-in position into a pulled-out position, wherein in the pushed-in position of the first and second rails (1, 2) a closed position of the pull-out guide and in the pulled-out position of the first and second rails (1, 2) an open position of the pull-out guide and wherein preferably when the first rail (1) moves relative to the second rail (2) the second rail (2) moves synchronously relative to the third rail (3).

8. Pull-out guide according to claim 7, **characterized in that** the second rail (2) has a rotatably mounted load-transmitting differential roller (7) which has a clearance in the vertical direction relative to the second rail (2) and rolls between a track (la) of the first rail (1) and a track (3a) of the third rail (3).

9. Pull-out guide according to claim 6 or 7, **characterized in that** when the second rail (2) is pushed into the third rail (3), starting from a state in which the second rail (2) is in the pulled-out position and the securing part (14) is in the release position, a section of the third rail (3) runs against the securing part (14) and, when the second rail (2) is pushed into the pushed-in position, displaces the securing part (14) into the locking position.

10. Pull-out guide according to claim 8 or 9, **characterized in that** the securing part (14) in the release position rests with a rear side against a support roller (8) arranged above the differential roller (7).

11. Pull-out guide according to claim 10, **characterized in that** the rear side of the securing part (14) has an indentation (14f) which, in the release position of the securing part (14), receives a front section of the support roller (8).

12. Pull-out guide according to one of claims 1 to 11, **characterized in that** the securing part (14) has an abutment surface (14e) with which it comes to rest against a support surface (1b) when the first rail (1) is pivoted relative to the second rail (2), with the front end of the first rail (1) being raised, which is formed by the upper side of a horizontal web (1c) of the first rail (1), wherein this horizontal web (1c) of the first rail (1) extends preferably parallel to the pull-out direction (6) without pivoting the first rail (1) relative to the second rail (2) while raising the front end of the first rail (1).

13. Pull-out guide according to one of claims 1 to 12, **characterized in that** the displacement direction (15) is parallel to the pull-out direction (6).

14. Pull-out guide according to one of claims 1 to 13, **characterized in that** the pivotability of the first rail (1) relative to the second rail (2) increases proportionally to the displacement movement covered, with the front end of the first rail (1) being raised over the displacement movement of the securing part (14) starting from the locking position into the release position.

15. Pull-out guide according to one of claims 1 to 14, **characterized in that** the displacement movement from the locking position of the securing part (14) to the release position of the securing part (14) extends over at least one fifth of the longitudinal extent of the second rail.

## Revendications

1. Guide d'extraction pour extraire une partie de meuble extractible (5) d'un corps de meuble (4), avec un premier rail (1) et un deuxième rail (2), le premier rail (1) pouvant être extrait du deuxième rail (2) dans une direction d'extraction (6) en partant d'une position insérée vers une position extraite, dans laquelle une extraction supplémentaire du premier rail (1) hors du deuxième rail (2) est limitée par la butée d'un élément de butée (13) du premier rail (1) contre une butée d'extraction (12) du deuxième rail (2), et dans laquelle une pièce de sécurité (14) est montée mobile sur le deuxième rail (2), qui peut pivoter entre une position de libération dans laquelle, pour extraire complètement le premier rail (1) du deuxième rail (2), le premier rail (1) peut pivoter par rapport au deuxième rail (2) en soulevant l'extrémité avant du premier rail (1) jusqu'à la position extraite du premier rail (1), que l'élément de butée (13) du premier rail (1) peut être amené hors de prise avec la butée d'extraction (12) du deuxième rail (2) et peut être déplacé au-delà de la butée d'extraction (12) du deuxième rail (2), et une position de blocage, dans laquelle le pivotement du premier rail (1) est bloqué en soulevant l'extrémité avant du premier rail (1) au moins jusqu'à ce que l'élément de butée (13) du premier rail (1) se trouvant dans la position extraite soit maintenu en prise avec la butée d'extraction (12), la pièce de sécurité (14) étant montée sur le deuxième rail (2) de manière à pouvoir coulisser sur une course de coulissement s'étendant de la position de blocage à la position de libération, dans une direction de coulissement (15) qui forme avec la direction opposée à la direction d'extraction (6) un angle (16) inférieur à 20°, de préférence inférieur à 10°, la capacité de pivotement du premier rail (1) par rapport au deuxième rail (2) augmentant continuellement en soulevant l'extrémité avant du premier rail (1) sur la course de déplacement de la pièce de sécurité (14) en partant de la position de blocage jusqu'à la position de libération, et la pièce de sécurité (14) se trouvant dans la position de blocage dans la zone de l'extrémité avant du deuxième rail (2) et dans une position de libération dans le tiers central de l'extension longitudinale du deuxième rail (2), le déplacement de la pièce de sécurité (14) de la position de blocage à la position de libération s'effectuant dans le sens inverse du sens d'extraction (6).

2. Guide d'extraction selon la revendication 1, **caractérisé en ce que** la pièce de sécurité (14) se trouve directement à l'extrémité avant du deuxième rail (2) dans la position de blocage.

3. Guide d'extraction selon la revendication 1 ou 2, **caractérisé en ce que** la capacité de déplacement de la pièce de sécurité (14) par rapport au deuxième rail (2) dans le sens opposé au sens de déplacement (15) est limitée par une butée de déplacement lorsque la position de blocage est atteinte.

4. Guide d'extraction selon la revendication 3, **caractérisé en ce que** pour former la butée de déplacement, la pièce de sécurité (14) présente une languette élastique (14b) qui coopère avec une surface de butée disposée sur le deuxième rail (2).

5. guide d'extraction selon la revendication 4, **caractérisé en ce que** la languette élastique (14b) est pressée élastiquement, à l'écart de la position de blocage, contre une surface du deuxième rail (2) s'étendant parallèlement à la direction de déplacement (15).

6. Guide d'extraction selon la revendication 4 ou 5, **caractérisé en ce que** la pièce de sécurité (14) présente un canal (14a) traversant la pièce de sécurité (14) parallèlement à la direction de déplacement (15), par lequel est reçue une section supérieure du deuxième rail (2), la languette élastique (14b) de la pièce de sécurité (14) étant disposée à l'intérieur du canal.

7. Guide d'extraction selon l'une des revendications 1 à 6, **caractérisé en ce que** le guide d'extraction présente un troisième rail (3), le deuxième rail (2) pouvant être extrait dans la direction d'extraction (6) du troisième rail (3) à partir d'une position insérée dans une position extraite, dans lequel, dans la position insérée du premier et du deuxième rail (1, 2), on a une position fermée du guide d'extraction et, dans la position extraite des premier et deuxième rails (1, 2), on a une position ouverte du guide d'extraction et, de préférence, lors du déplacement du premier rail (1) par rapport au deuxième rail (2), le deuxième rail (2) se déplace de manière synchrone par rapport au troisième rail (3).

8. Guide d'extraction selon la revendication 7, **caractérisé en ce que** le deuxième rail (2) comporte un rouleau différentiel (7) de transmission de charge, monté à rotation, qui possède un jeu dans la direction verticale par rapport au deuxième rail (2) et qui roule entre une voie de roulement (la) du premier rail (1) et une voie de roulement (3a) du troisième rail (3).

9. Guide d'extraction selon la revendication 6 ou 7, **caractérisé en ce que**, lors de l'insertion du deuxième rail (2) dans le troisième rail (3), en partant d'un état dans lequel le deuxième rail (2) se trouve dans la position extraite et la pièce de sécurité (14) se trouve dans la position de libération, une section du troisième rail (3) vient buter contre la pièce de sécurité (14) et, lors de l'insertion du deuxième rail (2) dans la position insérée, déplace la pièce de sécurité (14) dans la position de blocage.

10. Guide d'extraction selon la revendication 8 ou 9, **caractérisé en ce que** la pièce de sécurité (14), dans la position de libération, s'appuie par un côté arrière sur un rouleau d'appui (8) disposé au-dessus du rouleau différentiel (7).

11. Guide d'extraction selon la revendication 10, **caractérisé en ce que** la face arrière de la pièce de sécurité (14) présente un renfoncement (14f) qui, dans la position de libération de la pièce de sécurité (14), reçoit une section avant du rouleau d'appui (8).

12. Guide d'extraction selon l'une quelconque des revendications 1 à 11, **caractérisé en ce que** la pièce de sécurité (14) présente une surface d'appui (14e) par laquelle elle prend appui, lors du pivotement du premier rail (1) par rapport au deuxième rail (2), en soulevant l'extrémité avant du premier rail (1), sur une surface d'appui (1b), qui est formée par la face supérieure d'une âme horizontale (1c) du premier rail (1), cette âme horizontale (1c) du premier rail (1) s'étendant, sans pivotement du premier rail (1) par rapport au deuxième rail (2) , en soulevant l'extrémité avant du premier rail (1), de préférence parallèlement à la direction d'extraction (6).

13. Guide d'extraction selon l'une des revendications 1 à 12, **caractérisé en ce que** la direction de déplacement (15) est parallèle à la direction d'extraction (6).

14. Guide d'extraction selon l'une des revendications 1 à 13, **caractérisé en ce que** la capacité de pivotement du premier rail (1) par rapport au deuxième rail (2) augmente proportionnellement à la distance de déplacement parcourue, en soulevant l'extrémité avant du premier rail (1) sur la distance de déplacement de la pièce de sécurité (14), depuis la position de blocage jusqu'à la position de libération.

15. Guide d'extraction selon l'une des revendications 1 à 14, **caractérisé en ce que** la course de déplacement s'étend de la position de blocage de la pièce de sécurité (14) à la position de libération de la pièce de sécurité (14) sur au moins un cinquième de l'étendue longitudinale du deuxième rail.
